# EUROPÄISCHE PATENTSCHRIFT

(11) **EP 0 920 943 B1**
(45) Veröffentlichungstag und Bekanntmachung des Hinweises auf die Patenterteilung: **17.09.2003**
(21) Anmeldenummer: 98123180.6
(22) Anmeldetag: 04.12.1998
(51) Int. Cl.: B23H 1/02, B23H 7/04, B23H 7/18, B23H 7/06

(54) **Verfahren und Vorrichtung zum funkenerosiven Feinarbeiten**
Method and apparatus for electroerosion finish machiningn
Méthode et appareil pour l'usinage de finitions par électroérosion

(30) Priorität: 04.12.1997 DE 19753812
(43) Veröffentlichungstag der Anmeldung: 09.06.1999
(73) Patentinhaber: AGIE SA, 6616 Losone (CH)
(72) Erfinder: D'Amario, Rino, 6807 Taverne (CH)
(74) Vertreter: von Samson-Himmelstjerna, Friedrich R., Dipl.-Phys.

(56) Entgegenhaltungen:
- EP-A- 0 803 307
- DE-A- 4 011 752
- US-A- 4 236 057
- US-A- 4 521 662
- PATENT ABSTRACTS OF JAPAN vol. 1998, no. 01, 30. Januar 1998 (1998-01-30) & JP 09 248717 A (MORI NAOTAKE;MITSUBISHI ELECTRIC CORP), 22. September 1997 (1997-09-22)

## Beschreibung

Die Erfindung betrifft ein Verfahren zum funkenerosiven Feinbearbeiten eines Werkstücks mittels einer Elektrode, bei welchem sich die Elektrode und das Werkstück in einem Feinbearbeitungsabstand einander gegenüberstehen, und das Werkstück in einem geregelten Prozess mit Schlichtimpulsen beaufschlagt wird, sowie eine entsprechende Vorrichtung zum funkenerosiven Feinbearbeiten eines Werkstückes.

Eine Senk- oder Drahterosionsbearbeitung ist heute schon mit einer ausgezeichneten Oberflächengüte von Rₐ kleiner als 0.1µm und bei einer Materialbeeinflussung der Oberfläche mit einer Tiefe von weniger als 1µm Stand der Technik. Solche Bearbeitungen setzen Generatoren voraus, welche monopolare oder bipolare Impulse im Megahertzbereich mit Stromstärken um 1A erzeugen können.

In der DE-A-40 11 752 ist ein solcher Generator für Wechselstromimpulse offenbart. Es wird dabei ein Resonanzschwingkreis bei Resonanzspaltweiten bis 20µm und Wechselstromfrequenzen bis 30MHz vorgeschlagen, mit dem Ziel eine neuartige Resonanzbearbeitung beim Drahterodieren zu ermöglichen. Es dürfte sich aber vielmehr um einen störenden Selbstregeleffekt der Drahtelektrode handeln, welcher Fehler in der Konturtreue von der Grössenordnung der Resonanzspaltweite (20µm) verursachen kann. Dieser Effekt ist jedem Erosionsfachmann bekannt, der schon mit Schlichtimpulsen mit Frequenzen über 100kHz gearbeitet hat. Man stellt nämlich fest, dass trotz einwandfreier Servokontrolle und Kompensation des Schleppfehlers der Drahtelektrode scharfe Aussenkonturen verrundet werden und Innenecken Materialüberschuss aufweisen. Je öfter man einen solchen Feinschnitt wiederholt, umso schlechter wird die Präzision. Weiter stellt man fest, dass das Vertikalprofil ebenfalls zunehmend bauchig wird, und zwar in Zonen mit Materialüberschuss konvex bauchig, und in Zonen mit zuviel Materialabtrag konkav bauchig.

Aus der CH-A-650 433, nach der der Oberbegriff der unabhängigen Patentansprüche gebildet wurde, ist bekannt, bei einer funkenerosiven Bearbeitung während zusätzlich erzeugten periodischen Pausen zwischen Impulsgruppen, den elektrischen Widerstand des Funkenspaltes mit Hilfe einer Mess-Stromquelle zu ermitteln und damit den Servoantrieb, die Spülvorrichtung und den Generator zu steuern.

Dieses Verfahren hat die Aufgabe aus dem elektrischen Widerstand den Verschmutzungsgrad sowie Entladungskonzentrationen bei einer Senkbearbeitung zu ermitteln, und anhand dieser Werte den Prozess so zu regeln, dass eine höhere Abtragsleistung bei unbeaufsichtigtem Betrieb erreicht wird.

Insbesondere ist aber - anders als bei der im folgenden dargestellten Erfindung in der CH-A650 433 nicht etwa vorgesehen, das Kontakttastverhältnis von Elektrodenschwingungen zu ermitteln und damit die Genauigkeit der Bearbeitung zu verbessern. Es sind noch eine Vielzahl ähnlicher Messverfahren mit Prüfimpulsen bekannt, diese sind aber noch weiter vom Sinn und Zweck des hier vorgeschlagenen Verfahrens entfernt als die CH-A-650 433.

Zur Unterdrückung von Drahtvibrationen, die bei der funkenerosiven Bearbeitung auftreten können, ist es bekannt, solche Vibrationen zu detektieren (JP 09248717 A, JP 63-216631 A, JP 63-229227 A).

Die JP 63-312020 A betrifft die Bearbeitungsstabilität beim Senkerodieren. Zu Beginn der Erosion wird ein Servoregler mit einer bestimmten Kreisverstärkung geregelt. In einer zweiten Phase wird die Vibration des Antriebs (d.h. des Motors, der Pinole und der Elektrode) erfasst. Die Kreisverstärkung des Servoreglers wird dann so beeinflusst, dass diese Vibration ausgeregelt wird. Dazu ist eine automatische Verstärkungssteuerung vorgesehen.

Aufgabe der Erfindung ist, das bekannte Feinbearbeitungsverfahren mit sehr kurzen Impulsen bei kleinen Stromstärken und hohen Frequenzen dahingehend zu verbessern, dass ausser einer hochwertigen Oberflächengüte auch eine sehr genaue Bearbeitung ermöglicht wird, und ausserdem, eine entsprechende Vorrichtung zum funkenerosiven Feinbearbeiten zur Verfügung zu stellen.

Diese Aufgabe wird gelöst durch ein Verfahren zum funkenerosiven Feinbearbeiten eines Werkstücks mittels einer Elektrode, bei welchem sich die Elektrode und das Werkstück in einem Feinbearbeitungsabstand einander gegenüberstehen, und das Werkstück in einem geregelten Prozess mit Schlichtimpulsen beaufschlagt wird, wobei die Bearbeitung intermittierend erfolgt, wobei die Schlichtimpulse jeweils während Bearbeitungszeiten an den Spalt gelegt werden, und eine Messquelle wenigstens während Unterbrechungszeiten an den Spalt gelegt ist, dadurch gekennzeichnet, dass während den Unterbrechungszeiten durch elektrische Messung ermittelt wird, ob die Elektrode in Kontakt mit dem Werkstück ist, und aus dieser Messung ein Kontakttastverhältnis erhalten wird, welches die Häufigkeit des Kontaktes bestimmt, und dass hieraus ein Regelsignal für die Regelung des Prozesses abgeleitet wird.

Die Aufgabe wird vorrichtungsmäßig durch einen Vorrichtung zum funkenerosiven Feinbearbeiten eines Werkstücks gelöst, die zur Durchführung des obigen Verfahrens eingerichtet ist.

Vorteilhafte Weitergestaltungen sind in den abhängigen Ansprüchen angegeben.

Die Erfindung hat folgende Vorteile: die funkenerosive Feinbearbeitung wird so verbessert, dass nebst einer hohen Oberflächengüte eine hohe Formtreue am Werkstück erreicht werden kann. Beim Nachschneiden mit Drahtelektroden können Formtoleranzen, Eckenfehler und Vertikalprofile von besser als 1µm erreicht werden. Beim Vollschnitt mit Feindrähten im Bereich von 100µm bis 10µm Durchmesser wird trotz hoher Abtragsleistung eine bedeutend bessere Formtoleranz erreicht. Beim Bohren und Kontursenken mit feinen Elektroden wird die Präzision ebenfalls in den Mikrometerbereich gebracht. Schliesslich wird auch die funkenerosive Feinbearbeitung mit grossflächigen Senkelektroden bedeutend beschleunigt und in Oberflächenqualität und Abbildungstreue verbessert.

Die Vorteile der Erfindung bestehen insbesondere darin, dass der störende Selbstregeleffekt der Elektrode bei Impulsfrequenzen über etwa 100kHz überlistet wird, indem die Bearbeitung zyklisch unterbrochen wird und der Schwingungszustand der Elektrode z.B. über ein Kontakttastverhältnis erfasst und stabilisiert wird. Durch diese intermittierende Betriebsweise wird der Erosionsprozess im Mikrometerbereich kontrollierbar. Feine Draht- und Senkelektroden, welche besonders anfällig sind auf diesen störenden Selbstregeleffekt, können dank der Erfindung maximal belastet werden, ohne die Präzision zu kompromittieren. Die funkenerosive Feinbearbeitung mit grossflächigen Senkelektroden kann nach dieser Erfindung mit diesem signifikanten Prozess-Signal viel effizienter und genauer ausgeführt werden. Weiter ist von Vorteil, dass die Technologiewerte, d.h. die Gesamtheit aller Einstellparameter für eine spezifische Arbeit, in viel kürzerer Zeit ermittelt werden können, da nicht mehr auf viele Interdependenzen Rücksicht genommen werden muss.

Zudem ist die zusätzliche Investition im Vergleich zum Nutzen gering und es ist sogar möglich, bereits bestehende Anlagen nach diesem Konzept nachzurüsten.

Weitere Vorteile der Erfindung und ihrer Ausgestaltungen ergeben sich aus der nachfolgenden Beschreibung bevorzugter Anführungsbeispiele und der angefügten schematischen Zeichnung.

Es zeigen:
- Fig. 1: das Grundkonzept der Erfindung am Beispiel einer Drahtschneidemaschine;
- Fig. 2: den zeitlichen Verlauf der wichtigsten Signale in Fig. 1
- Fig. 3a, b, c: drei verschiedene Situationen beim Feinschnitt mit einer Drahtschneidemaschine nach dem Stand der Technik;
- Fig. 4a, b, c: drei verschiedene Einstellungen beim Feinschnitt mit einer Drahtschneidemaschine nach der Erfindung;
- Fig. 5: eine vorteilhafte Ausführungsform eines Generators;
- Fig. 6a, b, c: drei verschiedene Betriebsarten des Generators nach Fig. 5, dargestellt als zeitlicher Verlauf der Generatorspannung U_{G} und des Funkenstreckenstromes I_{F}.

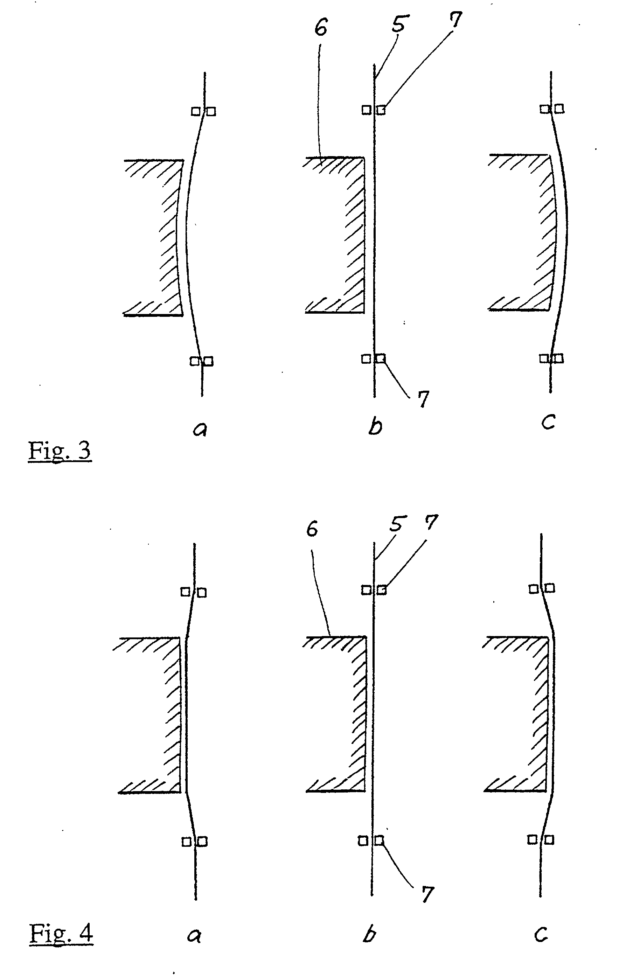

Anhand der Fig. 3 wird zunächst der störende Selbstregeleffekt beim Feinschnitt mit einer Drahtschneidemaschine nach dem Stand der Technik erklärt. Es sind drei Szenarien a, b, c in vertikalem Schnitt durch das Werkstück 6 die Elektrode 5 und einem oberen und unteren Führungskopf 7 dargestellt. Die Aussagen gelten ähnlich auch für erosive Bohrbearbeitungen, Kontursenken und Feinbearbeiten mit Senkelektroden bei Verwendung von Impulsfrequenzen über etwa 100kHz. Unter "Arbeitselektrode" wird im vorliegenden Text z.B. eine Draht- und Senkelektrode verstanden.

Es ist angenommen, dass ein ein- oder mehrmalig vorgeschnittenes Werkstück 6 durch Feinbearbeiten mit einer verlangten Oberflächengüte von Rₐ = 0.1µm versehen werden soll. Werkstück 6 und Elektrode 5 stehen sich dabei in einem sehr geringen Abstand gegenüber, der als Feinbearbeitungsabstand bezeichnet wird. In dem Arbeitsspalt erfolgt die Bearbeitung der Werkstückoberfläche durch sog. Schlichtimpulse. Mangels signifikanter Eingangsgrössen fährt man üblicherweise die Werkstückkontur mit einer konstanten Servogeschwindigkeit ab.

Szenario a zeigt die Bearbeitung einer Aussenecke des Werkstückes 6 oder eine Zone, wo mit den Vorschnitten, Fehler in Form von zu grossem Materialabtrag verursacht wurden. Das Interessante ist nun, dass die Funkenbearbeitung in diesen Zonen nicht wie erwartet, infolge Leerlauf unterbrochen wird, sondern mit grosser Stabilität aufrechterhalten bleibt. Aus dem konkaven, bauchigen Vertikalprofil würde man weiter vermuten, dass die Arbeitselektrode 5 wegen erhöhten elektrostatischen Kräften eine bekannte tonnenförmige Schwingung ausführt, also eine Schwingung, bei der die Arbeitselektrode symmetrisch in alle möglichen Richtungen aus der Längsachse ausgelenkt wird, ähnlich einer schwingenden Saite eines Musikinstruments. Dem ist aber nicht so, denn erstens müsste man dabei Instabilitäten der Funkenbearbeitung im Takt der Schwingfrequenz der Drahtelektrode feststellen, und zweitens konnte man mit optischen Drahtlagesensoren nach DE-A28 26 270 einwandfrei nachweisen, dass die Drahtelektrode völlig ruhig bis 15µm gegen das Werkstück 6 ausgelenkt wird. Drahtschwingungen bekannter Art konnten dabei nie über 2µm gemessen werden.

Szenario b zeigt die Bearbeitung auf einer Geraden der Kontur, wo die Vorschnitte keine Fehler hinterlassen haben. Nur in diesem Fall bringt ein Verfahren nach dem Stand der Technik akzeptable Resultate für die Genauigkeit.

Szenario c schliesslich zeigt die Bearbeitung einer Innenecke der Kontur oder Stellen, wo zuviel Material infolge Fehler der Vorschnitte auf dem Werkstück 6 belassen wurde. Hier lenkt sich die Elektrode 5 bis etwa 10µm vom Werkstück weg. Herkömmliche Servosysteme würden die Vorschubgeschwindigkeit gegenüber der Geradenkontur noch erhöhen (statt verringern), da trotz des Materialüberstands ein leicht grösserer Leerlaufanteil der Impulse (statt, wie erwartet, ein erhöhter Kurzschlußanteil) festgestellt wird. Dies würde den Fehler noch zusätzlich verstärken.

Bei allen drei Szenarien herrscht stabile Erosionsbearbeitung vor, und man kann keinerlei Information gewinnen, um den immer grösser werdenden Fehlern entgegenzuwirken.

Dieses unerwartete Verhalten kann nur durch einen Selbstregeleffekt der Elektrode 5 erklärt werden. Wenn man sich erinnert, dass die elektrostatischen Kräfte auf die Drahtelektrode umgekehrt proportional zum Funkenspalt zunehmen, und dass sie bei einem Funkenspalt gleich Null, unmittelbar verschwinden, so wird der Mechanismus des Szenarios a bald klar. Extrapoliert man nämlich grössere, messbare Funkenspalte nun für die Feinbearbeitung, so kommt man eher zu 1 bis 2µm, und nicht 20µm wie in der DE-A-40 11 752 angenommen wurde. Durch die enormen elektrostatischen Kräfte wird die Drahtelektrode über die ganze Werkstückhöhe gegen das Werkstück gezogen bis hin zum idealen Funkenspalt, wo die Erosion einsetzt, und dabei sogar Gegenkräfte erzeugt. Beim Szenario c überwiegen hingegen die abstoßenden Erosionskräfte der Funkenentladungen (die im übrigen auch im beim Szenario a vorhanden sind, dort aber klein gegenüber den anziehenden elektrostatischen Kräften sind). Dies ist die einzige plausible Erklärung für den unerwünschten Selbstregeleffekt.

Hier setzt nun die Erfindung an, indem man die Erosionsimpulse zyklisch unterbricht, und mit einer Messphase die Arbeitselektrode 5 selber zyklisch abtasten lässt, wieviel Material wirklich abzutragen ist. Die während der Messphase angelegte Spannung ist deutlich kleiner als die Arbeitsspannung während der Bearbeitung. Während der Messphase führt die Elektrode infolge der viel kleineren Auslenkkräfte nur noch Schwingungen im Mikrobereich und kleiner aus. Das Abtasten erfolgt während der Messphase über die Spannung zwischen Elektrode und Werkstück. Der unerwünschte Selbstregeleffekt wird elegant unterbunden, da der geringe Messstrom kaum zu Erosionsentladungen führt, wodurch die Abstossungskräfte verringert sind, und die geringe Messspannung von typischerweise 10VDC viel geringere elektrostatische Kräfte erzeugt. Die elektrostatische Kraft ist bekanntlich quadratisch von der Spannung abhängig, was für kleine Spannungen sehr kleine Kräfte bedeutet.

Fig ₄ zeigt die erfreulichen Resultate bei Anwendung der Erfindung. Im Unterschied zu Fig. 3 sind hier nicht die Situationen Aussenecke, Gerade und Innenecke dargestellt, sondern der letzte Feinschnitt, welcher mit drei verschiedenen Kontakttastverhältnissen des Abtastsignals gefahren wird. Das heisst, es werden dem Prozess nach Anspruch 5 und/oder 7 Sollwerte für das Kontakttastverhältnis vorgegeben, um daraus und aus dem gemessenen Kontakttastverhältnis Führungsgrössen SC für einen Servoregler 8 und eine Führungsgrösse GC für den Oszillator 1 zu erzeugen. Das Kontakttastverhältnis ist vorzugsweise definiert als derjenige Anteil der Messzeit, während der die Arbeitselektrode 5 in Kontakt mit dem Werkstück 6 ist, also als relative kumulative Kontaktzeit während der Messzeit.

Bei Fig. 4 a ist ein Sollwert für das mittlere Kontakttastverhältnis von 10% vorgegeben, bei Fig. 4 b 50% und bei Fig. 4 c 90%. Versuche haben dabei gezeigt, dass über diesen Bereich jede Einstellung reproduzierbar angewendet werden kann, und dass die reprodzierbare Auslenkung beispielsweise bei einer Werkstückhöhe von 50mm typisch 1µm gegen das Werkstück 6 im Fall a (10%), und 1µm vom Werkstück 6 weg im Fall c (90%) beträgt. Dies lässt sofort ein grosses Potential für Hochpräzisionsbearbeitung im Submikrometerbereich vermuten. Interessanterweise konnte man weder im Fall a noch im Fall c irgendeine mit üblichen Messmitteln feststellbare Bauchigkeit nachweisen. Dies dürfte dem hier erwünschten Selbstregeleffekt zu verdanken sein, welcher in diesem Bereich die Elektrode (5) über die ganze Werkstückhöhe parallel verschiebt.

Weiter werden bestehende Konturfehler, welche von den Vorschnitten herrühren, eliminiert, und Aussenecken und Innenecken der Kontur werden perfekt, mit Fehlern von weniger als 1µm reproduziert.

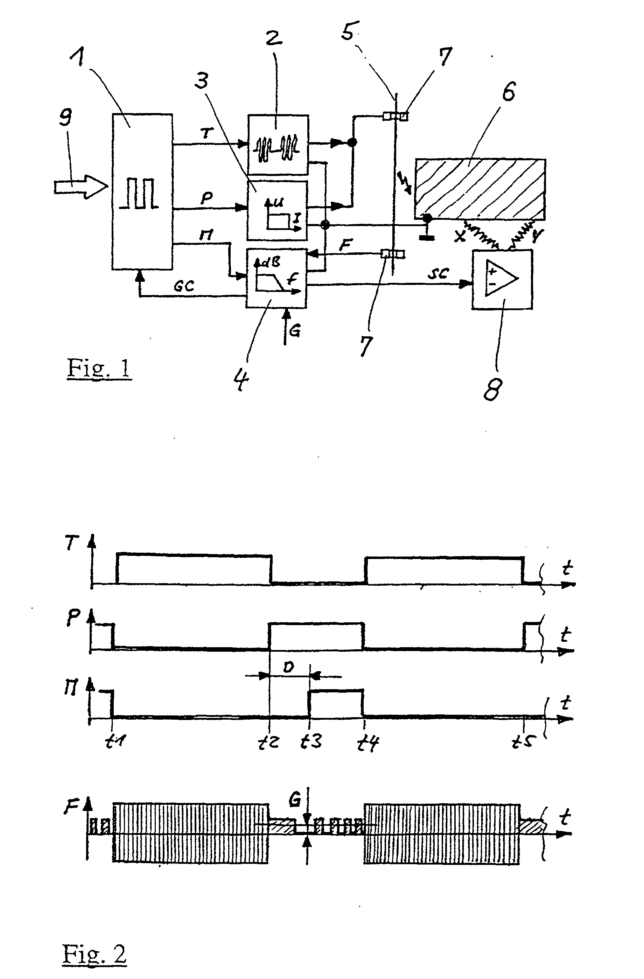

In Fig.1 ist das Grundkonzept für eine Drahtschneidemaschine nach der Erfindung gezeigt. Das Prinzip gilt aber genau gleich für funkenerosive Senk- oder Bohrmaschinen. Der einzige Unterschied betrifft den Servoregler 8 der dann im allgemeinen nur auf eine Z-Achse einwirkt, und den meistens nicht vorhandenen unteren Führungskopf 7). Das Funkenstrekkensignal (F) kann - wie gezeichnet - auf dem unteren Führungskopf 7, aber natürlich auch auf dem oberen Führungskopf 7 bzw. direkt von der Elektrode 5 abgenommen werden.

Verschiedene Komponenten sind in der Fig. 1 nicht gezeichnet, da ihre Darstellung für das Verständnis der Funktionsweise nicht erforderlich ist.

Ein Oszillator 1 empfängt über einen Steueranschluss 9 Einstellwerte von einem übergeordneten Steuersystem (nicht gezeichnet) und gibt ein Steuersignal T zum zyklischen intermittierenden Aktivieren des Generators 2 während einer Bearbeitungszeit aus. Ein weiteres Steuersignal P wird an eine Messquelle 3 geleitet, um diese zyklisch zwischen den Bearbeitungszeiten T d.h. während der Unterbrechungszeit P zu aktivieren.

Ein drittes Steuersignal M wird vom Oszillator 1 an das Messmodul 4 weitergeleitet, um dieses während der Messzeit M zur Bildung eines Mittelwertes zu veranlassen.

Generator 2, Messquelle 3 und Messmodul 4 sind über den oberen und/oder unteren Führungskopf 7 mit der Elektrode 5 sowie mit dem Werkstück 6 direkt verbunden.

Ein Servoregler 8 führt die Vorschubbewegungen über die Antriebsachsen X, Y und/oder weitere Antriebsachsen Z, U, V, A, B, C... aus.

In den Proceedings der Power Conversion-Konferenz vom Mai 1996 in Nürnberg, Deutschland, ist Seite 77 bis 84 eine Bauform für den Generator 2 detailliert beschrieben. Dieser Radiofrequenzverstärker in Klasse D-Bauweise hat bei 1200 Watt Ausgangsleistung einen Wirkungsgrad von über 84%. Eine Betriebsfrequenz von über 13MHz kann über einen Modulationseingang J1 mit einer Modulationstiefe von 100% beliebig moduliert werden. Das heisst, die Betriebsfrequenz kann paketweise während einer Bearbeitungszeit T freigegeben, und während einer Unterbrechungszeit P gesperrt werden. Dieser Verstärker kann sehr einfach für kleiner Leistungen redimensioniert werden. Eine Möglichkeit ist beispielsweise die Änderung der Speisespannung (300VDC) gegen tiefere Werte, bis etwa 30VDC.

Die Messquelle 3 dient dazu, während der Unterbrechungszeit durch Messen von Werkstückberührung (Kurzschluss) und Nichtberührung (Leerlauf) die Elektrodenschwingungen zu identifizieren. Da im Arbeitsspalt (Funkenspalt) auch bei Feinbearbeitung immer eine gewisse Verunreinigung des Dielektrikums vorhanden ist, und damit ein gewisser Leitwert als Störsignal auftritt, wird für die Messquelle 3 eine Stromquellencharakteristik vorgeschlagen. Das hat den Vorteil, dass man die Stromquelle so einstellen kann, dass ein hoher Leitwert der Funkenstrecke noch keinen Spannungseinbruch der Messquelle 3 verursacht. Eine einfache Spannungsquelle mit Lastwiderstand wäre durch die dreieckförmige U-I-Kennlinie viel empfindlicher für diese Störungen.

Es kann auch notwendig sein, die Polarität der Messquelle der Bearbeitungsaufgabe anzupassen oder sogar alternierend zu ändern. So neigen Werkstücke aus Aluminium oder Titan bei Wasserdielektrikum unter hohen negativen Elektrodenspannungen zu einer Oxidschichtbildung, welche die Messung beeinträchtigt. Eine positive Elektrodenspannung verursacht keine Probleme dieser Art.

Die Messquelle 3 weist also ein Schaltelement am Ausgang auf, welches sowohl die Messimpulse während der Unterbrechungszeit P in beiden Polaritätsrichtungen leiten kann, als auch die gegebenenfalls bipolaren Spannungsimpulse des Generators 2 in beiden Polaritätsrichtungen isolieren kann. Bekannte Transistor-Diodenschaltungen sind dazu geeignet, sei es in Brückenanordnung, oder antiseriell bzw. anti-parallel.

An dieser Stelle sei vermerkt, dass eine Bearbeitung mit Unterbrechungszeiten für Messzwecke nicht zwangsläufig zu einer Leistungseinbusse führt. Für die Belastung der Elektrode ist nämlich die mittlere Leistung massgebend, den zeitlichen Verlust kann man z.B. durch eine Erhöhung der Stromimpulse des Generators 2 kompensieren. Beim funkenerosiven Mikrobohren hat man z.B. mit einem Elektrodendurchmesser von 200µm in Stahl, mit dem erfindungsmässigen Verfahren sogar eine Verdreifachung der Bohrgeschwindigkeit gegenüber dem bis heute angewendeten Verfahren festgestellt. Gleichzeitig sind auch die Abbildungstreue und die Reproduzierbarkeit bedeutend besser geworden.

Das Messmodul 4 in Fig. 1 kann hingegen auch dauernd an das Funkenstreckensignal F angeschlossen werden. Sein Eingang muss nur eine entsprechende Spannungsfestigkeit aufweisen. Wichtig ist dabei aber, dass das Vergleichsresultat aus Funkenstreckensignal F und (einem unten näher erläuterten) Grenzwert G nur während der Messzeit M ausgewertet und gemittelt wird. Mit CMOS-Bauteilen und einem Tiefpassfilter kann man das Problem lösen. Da das Kontakttastverhältnis der Elektrodenschwingung jedoch ein zeitdiskreter Mittelwert ist, kann die Mittelwertbildung ebensogut rein digital im Zeitfenster der Messzeit M realisiert werden, z.B. durch Zählen von Clockimpulsen während dem die Elektrode 5 im Messzeit-Zeitfenster das Werkstück 6 berührt, d.h. das Funkenstreckensignal F unterhalb des Grenzwertes G liegt, und Auslesen des Zählerstandes nach einer festgesetzten Filterzeit.

Entsprechende Schaltungen sind z.B. von der Ermittlung der Zündverzögerungszeit her dem Fachmann bestens bekannt, z.B. aus der DE-A-22 50 872.

Der Bearbeitungsprozess wird auf der Grundlage einer Regelung (mit geschlossenem Wirkungskreis) durchgeführt. Hierzu werden dem Messmodul 4 ausser dem Grenzwert G noch ein erster und zweiter Sollwert zur Erzeugung der Führungsgrösse SC für den Servoregler 8 und damit die Vorschubgeschwindigkeit, und der Führungsgrösse GC für den Oszillator 1 und damit die Bearbeitungszeit T vorgegeben. Die beiden Sollwerte bestimmen bei welchem Kontakttastverhältnis der Prozess ablaufen soll, d.h. wieviel % der Messzeit M die Elektrode 5 im Durchschnitt im Kontakt mit dem Werkstück 6 sein soll. Falls das ermittelte Kontakttastverhältnis den ersten bzw. zweiten Sollwert übersteigt, wird die Vorschubgeschwindigkeit der Elektrode 5 verringert bzw. die Dauer der Bearbeitungszeit T erhöht. Man kann die zwei Sollwerte gleich einstellen, dann werden sich die Regeleingriffe auf die Bearbeitungszeit T und die Vorschubgeschwindigkeit in ihrer Wirkung addieren. Bei verschiedenen Sollwerten entfaltet der unempfindlichere Regeleingriff seine Wirkung erst, wenn der empfindlichere Regeleingriff wegen Sättigung oder transienter Abweichung das Kontakttastverhältnis nicht mehr bei seinem Sollwert halten kann. Es sind dabei natürlich Stabilitätskriterien zu beachten, welche aber dem Regelfachmann bestens bekannt sind. Es wurde hier immer von einer Definition für das Kontakttastverhältnis ausgegangen, die für 0% dauernd Leerlauf, und für 100% dauernd Kurzschluss, d.h. Berührung von Elektrode 5 mit dem Werkstück 6 meint.

Es ist klar, dass man diese Definition auch invertieren kann.

Fig. 2 zeigt schematisch den zeitlichen Verlauf der Signale, Bearbeitungszeit T, Unterbrechungszeit P, Messzeit M und Funkenstreckensignal F. Von t1 bis t2 und t4 bis t5 ist Bearbeitungszeit, welche eventuell über die zweite Führungsgrösse GC verkürzt wird. Während dieser Zeit ist der Generator 2 eingeschaltet, und die Messquelle 3 ausgeschaltet.

Von t2 bis t4 ist Unterbrechungszeit, der Generator 2 ist nun ausgeschaltet, dafür ist die Messquelle 3 eingeschaltet. Während einer Verzögerungszeit D hat die Elektrode 5 Zeit, sich auf den durch die Messquelle 3 gegebenen Schwingungszustand einzuschwingen. Da dabei wegen der geringen Messspannung die elektrostatischen Kräfte viel kleiner als während der Bearbeitung sind, wird auch die Schwingungsweite viel kleiner. Zwischen t3 und t4 ist Messzeit, wo ausgewertet wird, wieviel % der Messzeit M das Funkenstreckensignal F unterhalb dem Grenzwert G liegt. Der Grenzwert G wird etwa auf die Hälfte der Spannung der Messquelle 3 eingestellt. Während dieser Zeit stellt man regelmässige Oszillationen im Bereich von einigen kHz fest. Diese Frequenz ist abhängig von der Masse und der Elastizität der Elektrode 2. Entgegen der Vermutung schwingen auch grossflächige Senkelektroden unter Feinbearbeitungsbedingungen. Es treten hier sogar komplexe Schwingungsmoden infolge Biege-, Scherund Torsionskräften auf. Man hat bis jetzt die symmetrischen Schwärzungsbilder der Elektroden den unterschiedlichen Spülbedingungen zugeschrieben, Versuche haben jetzt aber gezeigt, dass bei Anwendung des erfindungsgemässen Verfahrens, diese Schwärzungsbilder verschwinden. Dies ist sicher ein Anzeichen, dass man diese Schwingungen im Mikrobereich nun kontrollieren kann. Die Bearbeitungszeiten waren auch bei diesen Versuchen erheblich kürzer als mit traditionellen Methoden.

Alternativ kann man auch auf die Verzögerungszeit D von t2 bis t3 verzichten, und unmittelbar nach der Bearbeitungszeit die Messzeit M starten. Die Messzeit dauert dann nur noch typisch 200µs und ist gleich lang wie die Unterbrechungszeit P. Die Information entsteht dann in einer leicht veränderten Form, kann aber genau gleich ausgewertet werden. Im Durchschnitt liegt nämlich jetzt während der Messzeit M die Spannung um so länger über dem Grenzwert G, je weiter die Elektrode zuvor vom Werkstück entfernt war. Diese Messart kann interessant sein, wenn man höhere Abtragsleistungen bei einer bescheideneren Genauigkeit wünscht.

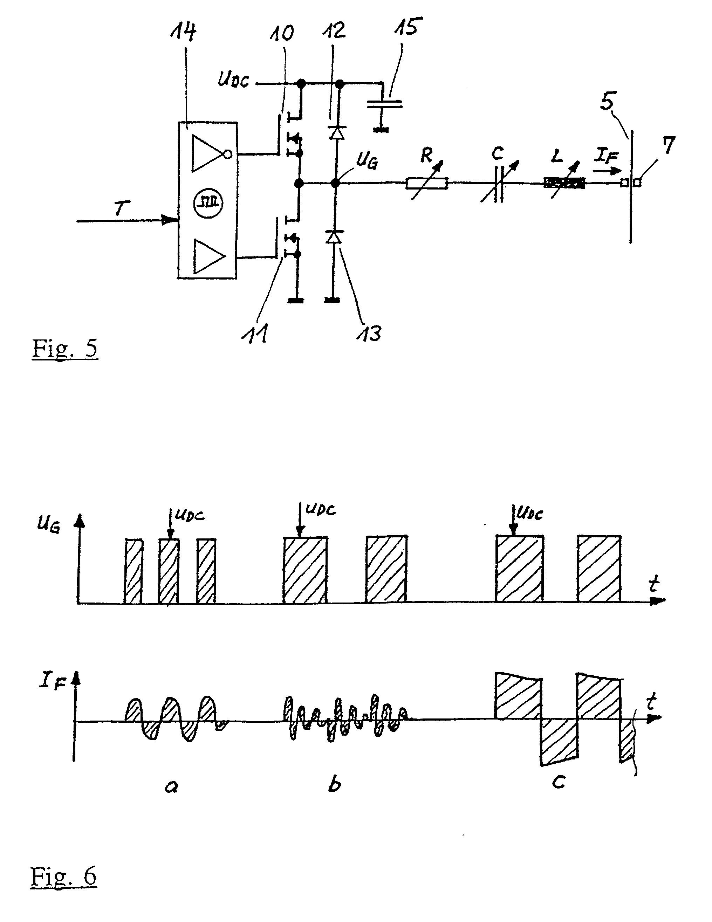

Fig. 5 zeigt eine weitere vorteilhafte Ausführungsform des Generators 2 in Halbbrückentechnik.

Zwei Halbleiterschalter 10, 11 z.B. MOSFET, werden aus einer Steuerschaltung 14 mit gegenphasigen Steuerimpulsen versorgt. Die Steuerschaltung 14 weist einen einstellbaren Oszillator auf, und empfängt ebenfalls das Bearbeitungszeitsignal T um die Halbleiterschalter 10, 11 ausserhalb der Bearbeitungszeit T zu blockieren. Antiparallele Dioden 12, 13 schützen die Halbleiterschalter 10, 11 bei Fehlanpassung der seriellen Ausgangsbeschaltung R, C, L vor Überspannung und Inversbetrieb.

Fig. 6 zeigt nun drei verschiedene Betriebsarten des Generators nach Fig. 5 welche nur durch entsprechende Einstellung der seriellen Ausgangsbeschaltung R, C, L bewirkt werden. Die obere Kurve zeigt die Generatorspannung U_{G} am Mittelpunkt der Brücke. Es entsteht dort eine Rechteckschwingung mit der Amplitude der einstellbaren Speisespannung U_{DC}, welche mit dem Kondensator 15 gepuffert ist. Die Dauer der Rechteckschwingungen ist abhängig von der Einstellung des Oszillators in der Steuerschaltung 14. Die untere Kurve zeigt den Funkenstreckenstrom I_{F} wie er über den Führungskopf 7 an die Elektrode 5 bei gezündeter Funkenstrecke abgegeben wird. Das Werkstück 6 ist dabei am ruhigen Erdpotential der Speisespannung U_{DC} angeschlossen.

Fall a zeigt ideale Anpassung der seriellen Ausgangsbeschaltung R, C, L, indem die Resonanzfrequenz des Schwingkreises, gebildet aus der Kapazität C und der Induktivität L, genau der Schwingfrequenz der Generatorspannung U_{G} entsprechen. Der Lastwiderstand R kann dabei kurzgeschlossen sein, falls nicht, wird dieser nur eine Reduktion der Stromamplitude bewirken. Die Induktivität L kann allenfalls nur aus der Streuinduktivität des Entladekreises bestehen. Hier sei erwähnt, dass ein Klasse D Radiofrequenzverstärker nur in dieser Betriebsart, nach Fall a arbeitet.

Fall b zeigt eine grobe Fehlanpassung, indem der Schwingkreis, gebildet aus Kapazität C und Induktivität L, auf eine Resonanzfrequenz eingestellt ist, welche hier z.B. sechsmal höher liegt, als die Frequenz welche im Oszillator der Steuerschaltung 14 eingestellt ist. Zur Vermeidung von Gegenphasesituationen zwischen Generatorspannung U_{G} und dem Funkenstreckenstrom I_{F} kann man den Lastwiderstand R so einstellen, dass die Stromamplituden im wesentlichen nach der Dauer eines Generatorimpulses U_{G} abgeklungen sind. Damit wird es möglich, mit vergleichsweise einfachen Mitteln Entladefrequenzen bis etwa 25 MHz zu erzeugen. Die Rückschwingamplitude des Funkenstreckenstromes I_{F} wird über die antiparallelen Dioden 12, 13 auf den Kondensator 15 geleitet, wo die Energie zwischengespeichert wird.

Fall c zeigt eine dritte Betriebsart, wo die Induktivität L möglichst zu Null eingestellt wird, und aus Lastwiderstand R und Kapazität C eine Zeitkonstante gebildet wird, die grösser ist als die Impulsbreite der Generatorspannung U_{G}. Über die einstellbare Speisespannung U_{DC} und die Einstellung des Lastwiderstandes R kann man in weiten Grenzen die Amplitude des Funkenstreckenstromes I_{F} bestimmen. Weil immer eine Kapazität C in Serie geschaltet ist, wird eine Gleichstromkomponente des Funkenstreckenstromes I_{F} wirkungsvoll unterbunden.

Diese Erläuterungen belegen die Vorteile und die viel zahlreicheren Einstellmöglichkeiten dieser Ausführungsform des Generators 2.

## Patentansprüche

1. Verfahren zum funkenerosiven Feinbearbeiten eines Werkstücks (6) mittels einer Elektrode (5), bei welchem sich die Elektrode (5) und das Werkstück (6) in einem Feinbearbeitungsabstand einander gegenüberstehen, und das Werkstück (6) in einem geregelten Prozess mit Schlichtimpulsen beaufschlagt wird, bei welchem die Bearbeitung intermittierend erfolgt, wobei die Schlichtimpulse jeweils während Bearbeitungszeiten (T) an den Spalt gelegt werden, und eine Messquelle (3) wenigstens während Unterbrechungszeiten (P) an den Spalt gelegt ist,
**dadurch gekennzeichnet, dass**
- während den Unterbrechungszeiten (P) durch elektrische Messung ermittelt wird, ob die Elektrode (5) in Kontakt mit dem Werkstück (6) ist,
- und aus dieser Messung ein Kontakttastverhältnis erhalten wird, welches die Häufigkeit des Kontaktes bestimmt, und dass
- hieraus ein Regelsignal für die Regelung des Prozesses abgeleitet wird.

2. Verfahren nach Anspruch 1, **dadurch gekennzeichnet, dass** das Erfassen von Schwingungen der Arbeitselektrode (5) erfolgt, indem jeweils während Messzeiten (M) aus der Signalform des Funkenstreckensignals (F) das Kontakttastverhältnis der Elektrodenschwingungen ermittelt wird.

3. Verfahren nach Anspruch 2, **dadurch gekennzeichnet, dass** das Kontakttastverhältnis definiert ist als derjenige Anteil der Messzeit (M), während der die Arbeitselektrode (5) in Kontakt mit dem Werkstück (6) ist.

4. Verfahren nach Anspruch 2 oder 3, **dadurch gekennzeichnet, dass** die Messzeit (M) mit der Unterbrechungszeit (P) synchronisiert ist, ihr Beginn jedoch um eine Verzögerungszeit (D) verzögert wird.

5. Verfahren nach einem der Ansprüche 2 bis 4, **dadurch gekennzeichnet, dass**
eine in einem Messmodul (4) aus dem ermittelten Kontakttastverhältnis und einem ersten Sollwert erzeugte erste Führungsgrösse (SC) einem Servoregler (8) zugeführt wird, um ein Vorschubsystem (X, Y) zu steuern.

6. Verfahren nach Anspruch 5, **dadurch gekennzeichnet, dass**,
falls das ermittelte Kontakttastverhältnis den ersten Sollwert übersteigt, die Vorschubgeschwindigkeit verringert wird, und falls das Kontakttastverhältnis tiefer als der erste Sollwert liegt, die Vorschubgeschwindigkeit erhöht wird.

7. Verfahren nach einem der Ansprüche 2 bis 6, **dadurch gekennzeichnet, dass** eine in einem Messmodul (4) aus dem ermittelten Kontakttastverhältnis und einem zweiten Sollwert erzeugte zweite Führungsgrösse (GC) die Dauer der Bearbeitungszeit (T) steuert.

8. Verfahren nach Anspruch 7, **dadurch gekennzeichnet, dass**,
falls das ermittelte Kontakttastverhältnis tiefer liegt als der zweite Sollwert, die Dauer der Bearbeitungszeit (T) reduziert wird, und/oder wenn das Kontakttastverhältnis höher als der zweite Sollwert liegt, die Dauer der Bearbeitungszeit (T) erhöht wird.

9. Verfahren nach einem der Ansprüche 1 bis 8, **dadurch gekennzeichnet, dass**
eine Messquelle (3) eine Stromquellencharakteristik mit Spannungslimitierung aufweist.

10. Verfahren nach Anspruch 9, **dadurch gekennzeichnet, dass**
die Stromquellencharakteristik der Messquelle (3) zwischen 10mA und 600mA einstellbar ist, und die Spannungslimitierung der Messquelle (3) zwischen 1 V und 100 V einstellbar ist.

11. Verfahren nach Anspruch 9 oder 10, **dadurch gekennzeichnet, dass**
in dem Messmodul (4) das Funkenstreckensignal(F) mit einem einstellbaren Grenzwert (G) verglichen wird, wobei der Grenzwert (G) geringer ist als die eingestellte Spannungslimitierung der Messquelle (3), und das Vergleichsresultat während der Messzeit (M) einem Filter zugeführt wird, wobei das gemittelte Kontakttastverhältnis zwischen den Messzeiten (M) im Filter unverändert gehalten wird.

12. Verfahren nach einem der Ansprüche 1 bis 11, **dadurch gekennzeichnet, dass**
die Polarität des Ausgangssignals der Messquelle (3) positiv oder negativ oder von Unterbrechungszeit (M) zu Unterbrechungszeit (M) alternierend positiv oder negativ eingestellt wird.

13. Verfahren nach einem der Ansprüche 1 bis 12, **dadurch gekennzeichnet, dass**
die typische Bearbeitungszeit (T) ohne Regeleingriff 30ms beträgt, und linear mit sinkendem Kontakttastverhältnis über die Führungsgrösse (GC) bis gegen Null bei 0% Kontakttastverhältnis reduziert wird.

14. Verfahren nach Anspruch 13, **dadurch gekennzeichnet, dass**
die typische Unterbrechungszeit (P) 1ms beträgt, und die typische Verzögerungszeit(D) 200µs beträgt.

15. Verfahren nach einem der Ansprüche 1 bis 13, **dadurch gekennzeichnet, dass**
die typische Unterbrechungszeit (P) 200µ5 beträgt, und die typische Verzögerungszeit (D) Null ist, und die typische Messzeit (M) gleich der Unterbrechungszeit (P) ist.

16. Verfahren nach einem der Ansprüche 1 bis 15, **dadurch gekennzeichnet, dass**
ein Generator (2) bipolare oder monopolare Impulse erzeugt, deren Impulsdauer zwischen 10µs und 20ns liegt, und deren Stromamplitude zwischen 10A und 500mA liegt, und deren Impulsfrequenz zwischen 100kHz und 25 MHz liegt, und
der Generator (2) einen Aktivierungseingang aufweist, um das Bearbeitungszeitsignal (T) zu empfangen, und um nur während dieser Zeit (T) die Impulse zu erzeugen.

17. Vorrichtung zum funkenerosiven Feinbearbeiten eines Werkstücks (6) mittels einer Elektrode (5), bei welchem sich die Elektrode (5) und das Werkstück (6) in einem Feinbearbeitungsabstand einander gegenüberstehen, und das Werkstück (6) in einem geregelten Prozess mit Schlichtimpulsen beaufschlagt wird, wobei die Vorrichtung so eingerichtet ist, dass die Bearbeitung intermittierend erfolgt, wobei die Schlichtimpulse jeweils während Bearbeitungszeiten (T) an den Spalt gelegt werden, und eine Messquelle (3) wenigstens während ünterbrechungszeiten (P) an den Spalt gelegt ist,
**dadurch gekennzeichnet, dass** die Vorrichtung so eingerichtet ist, dass
- während den Unterbrechungszeiten (P) durch elektrische Messung ermittelt wird, ob die Elektrode (5) in Kontakt mit dem Werkstück (6) ist,
- und aus dieser Messung ein Kontakttastverhältnis erhalten wird, welches die Häufigkeit des Kontaktes bestimmt, und dass
- hieraus ein Regelsignal für die Regelung des Prozesses abgeleitet wird.

18. Vorrichtung nach Anspruch 17, **dadurch gekennzeichnet, dass**
- ein Generator (2) vorgesehen ist, der die Schlichtimpulse nur während einer Bearbeitungszeit (T) zyklisch zu erzeugt,
- die Messquelle (3) so eingerichtet ist, dass sie in Abhängigkeit eines Unterbrechungszeitsignals (P) während der Unterbrechungszeit die Messimpulse zu erzeugt,
- ein Messmodul (4) vorgesehen ist, welches so eingerichtet ist, dass es während einer Messzeit (M) aus dem Funkenstreckensignal (F) ein Kontakttastverhältnis der Elektrodenschwingungen ermittelt, und
- das Messmodul (4) einen ersten (SC) und/oder zweiten (GC) Führungsgrössen-Ausgang aufweist, um in Abhängigkeit des Kontakttastverhältnisses ein Vorschubsystem (X,Y) zu steuern und/oder die Dauer der Bearbeitungszeit (T) zu steuern.

19. Vorrichtung nach Anspruch 18, **dadurch gekennzeichnet, dass** sie so eingerichtet ist, dass das Kontakttastverhältnis definiert ist als derjenige Anteil der Messzeit (M), während der die Arbeitselektrode (5) in Kontakt mit dem Werkstück (6) ist.

20. Vorrichtung nach Anspruch 18 oder 19, **dadurch gekennzeichnet, dass** der Generator (2), die Messguelle (3) und/oder das Messmodul (4) einen Aktivierungseingang aufweisen, mit dem deren Aktivierung steuerbar ist.

21. Vorrichtung nach einem der Ansprüche 18 bis 20, **dadurch gekennzeichnet, dass**
die Messquelle (3) eine einstellbare Stromquelle aufweist, deren Ausgang mit einer einstellbaren Spannungslimitierungsschaltung und einer Impulsunterbrechungsschaltung und einem ggf. Polaritätsinverter versehen sind.

22. Vorrichtung nach einem der Ansprüche 18 bis 21, **dadurch gekennzeichnet, dass**
das Messmodul (4) einen Komparator enthält, welcher zum Empfang des Funkenstreckensignals (F) und einen einstellbaren Grenzwerts (G) eingerichtet ist, und dass die Vorrichtung so eingerichtet ist, dass der Ausgang des Komparators über eine Schaltvorrichtung einem Tiefpass-Filter zur Bildung eines Mittelwertes während einer Messzeit (M) zugeführt wird, wobei während der Messzeit (M) die Schaltvorrichtung im leitenden Zustand ist, und zwischen den Messzeiten (M) die Schaltvorrichtung im isolierten Zustand ist.

23. Vorrichtung nach einem der Ansprüche 18 bis 22 **dadurch gekennzeichnet, dass**
der Generator (2) einen Klasse-C-Verstärker aufweist, wobei ein Modulationseingang vorgesehen ist zum Empfang eines Bearbeitungszeitsignals (T), und dass die Modulationstiefe dabei 100% beträgt.

24. Vorrichtung nach einem der Ansprüche 18 bis 23, **dadurch gekennzeichnet, dass**
der Generator (2) aus mindestens zwei Schaltelementen (10,11) in Halbbrückenschaltung und antiparallelen Dioden(12, 13) besteht, wobei die Schaltelemente (10, 11) über einen Blockiereingang anhand eines Bearbeitungszeitsignals (T) in den nichtleitenden Zustand versetzt werden.

25. Vorrichtung nach einem der Ansprüche 18 bis 24, **dadurch gekennzeichnet, dass**
der Generator (2) eine serielle Ausgangsbeschaltung (R, C , L) enthält, welche eines oder mehrere der folgenden Glieder aufweist:
- einen einstellbaren Lastwiderstand (R)
- eine einstellbare Induktivität (L)
- eine einstellbare Kapazität (C).

26. Vorrichtung nach Anspruch 25, **dadurch gekennzeichnet, dass**
die Glieder so eingestellt sind, dass die Resonanzfrequenz gebildet durch die Induktivität (L) und die Kapazität (C) in der Nähe der Betriebsfrequenz des Generators(2) liegt.

27. Vorrichtung nach Anspruch 25, **dadurch gekennzeichnet, dass**
die Glieder so eingestellt sind, dass die Resonanzfrequenz gebildet durch die Induktivität (L) und die Kapazität (C) ein Mehrfaches der Betriebsfrequenz des Generators (2) beträgt, und der Lastwiderstand (R) so eingestellt ist, dass die Resonanzschwingung während eines Einzelimpulses des Generators (2) im wesentlichen abklingt.

28. Vorrichtung nach Anspruch 25, **dadurch gekennzeichnet, dass**
die Induktivität (L) auf den Wert Null eingestellt ist, und die Werte für die Kapazität (C) und den Lastwiderstand (R) so eingestellt sind, dass deren Zeitkonstante grösser ist als die Dauer eines Einzelimpulses des Generators (2).

## Claims

1. A process for the fine electric discharge machining of a workpiece (6) by means of an electrode (5), during which the electrode (5) and the workpiece (6) are situated opposite one another at a fine machining distance, and the workpiece (6) is supplied with finishing pulses in a controlled process, in which the machining takes place intermittently, the finishing pulses in each case being applied to the gap during machining periods (T), and a measurement source (3) being applied to the gap at least during interruption periods (P),
**characterised in that**
- during the interruption periods (P) it is determined by electrical measurement whether the electrode (5) is in contact with the workpiece (6),
- and from this measurement a contact pulse duty ratio is obtained which determines the frequency of the contact,
and **in that**
- from this is derived a control signal for controlling the process.

2. A process according to Claim 1,
**characterised in that** the recording of vibrations of the working electrode (5) takes place by the contact pulse duty ratio of the electrode vibrations being determined in each case during measurement periods (M) from the signal form of the spark gap signal (F).

3. A process according to Claim 2,
**characterised in that** the contact pulse duty ratio is defined as the part of the measurement period (M) during which the working electrode (5) is in contact with the workpiece (6).

4. A process according to Claim 2 or 3,
**characterised in that** the measurement period (M) is synchronised with the interruption period (P), however its start is delayed by a delay period (D).

5. A process according to one of Claims 2 to 4,
**characterised in that** a first reference magnitude (SC) produced in a measurement module (4) from the determined contact pulse duty ratio and a first set value is supplied to a servo controller (8) to control a feed system (X, Y).

6. A process according to Claim 5,
**characterised in that** if the determined contact pulse duty ratio exceeds the first set value the feed velocity is reduced, and if the contact pulse duty ratio is lower than the first set value the feed velocity is increased.

7. A process according to one of Claims 2 to 6,
**characterised in that** a second reference magnitude (GC) produced in a measurement module (4) from the determined contact pulse duty ratio and a second set value controls the duration of the machining period (T).

8. A process according to Claim 7,
**characterised in that** if the determined contact pulse duty ratio is lower than the second set value, the duration of the machining period (T) is reduced, and/or if the contact pulse duty ratio is higher than the second set value, the duration of the machining period (T) is increased.

9. A process according to one of Claims 1 to 8,
**characterised in that** a measurement source (3) comprises a current source characteristic with voltage limitation.

10. A process according to Claim 9,
**characterised in that** the current source characteristic of the measurement source (3) can be set between 10 mA and 600 mA, and the voltage limitation of the measurement source (3) can be set between 1 V and 100 V.

11. A process according to Claim 9 or 10,
**characterised in that** in the measurement module (4) the spark gap signal (F) is compared with an adjustable limit value (G), the limit value (G) being less than the set voltage limitation of the measurement source (3), and the comparison result is supplied during the measurement period (M) to a filter, the averaged contact pulse duty ratio being kept unchanged in the filter between the measurement periods (M).

12. A process according to one of Claims 1 to 11,
**characterised in that** the polarity of the output signal of the measurement source (3) is set positively or negatively or alternating positively or negatively from interruption period (M) to interruption period (M).

13. A process according to one of Claims 1 to 12,
**characterised in that** the typical machining time (T) without control intervention is 30 ms, and as the contact pulse duty ratio falls is reduced linearly via the reference magnitude (GC) to around zero with a contact pulse duty ratio of 0%.

14. A process according to Claim 13,
**characterised in that** the typical interruption period (P) is 1 ms and the typical delay period (D) is 200 µs.

15. A process according to one of Claims 1 to 13,
**characterised in that** the typical interruption period (P) is 20 u5, and the typical delay period (D) is zero, and the typical measurement period (M) is equal to the interruption period (P).

16. A process according to one of Claims 1 to 15,
**characterised in that** a generator (2) generates bipolar or monopolar pulses, the pulse duration of which lies between 10 µs and 20 ns, and the current amplitude of which lies between 10 A and 500 mA, and the pulse frequency of which lies between 100 kHz and 25 MHz, and the generator (2) comprises an activation input to receive the machining period signal (T) and to generate the pulses only during this period (T).

17. An apparatus for the fine electric discharge machining of a workpiece (6) by means of an electrode (5), in which the electrode (5) and the workpiece (6) are situated opposite one another at a fine machining distance, and the workpiece (6) is supplied with finishing pulses in a controlled process, the apparatus being set up so that the machining takes place intermittently, the finishing pulses being applied to the gap during machining periods (T), and a measurement source (3) being applied to the gap at least during interruption periods (P),
**characterised in that** the apparatus is set up so that
- during the interruption periods (P) it is determined by electrical measurement whether the electrode (5) is in contact with the workpiece (6),
- and from this measurement a contact pulse duty ratio is obtained which determines the frequency of the contact,
and **in that**
- a control signal is derived from this for the regulation of the process.

18. An apparatus according to Claim 17,
**characterised in that**
- a generator (2) is provided, which cyclically generates the finishing pulses only during a machining period (T),
- the measurement source (3) is set up so that it generates the measuring pulses as a function of an interruption period signal (P) during the interruption period,
- a measurement module (4) is provided, which is set up so that during a measurement period (M) it determines a contact pulse duty ratio of the electrode vibrations from the spark gap signal (F), and
- the measurement module (4) comprises a first (SC) and/or a second (GC) reference magnitude output, so as to control a feed system (X, Y) as a function of the contact pulse duty ratio and/or to control the duration of the machining period (T).

19. An apparatus according to Claim 18,
**characterised in that** it is set up so that the contact pulse duty ratio is defined as the part of the measurement period (M) during which the working electrode (5) is in contact with the workpiece (6).

20. An apparatus according to Claim 18 or 19,
**characterised in that** the generator (2), the measurement source (3) and/or the measurement module (4) comprise an activation input with which their activation can be controlled.

21. An apparatus according to one of Claims 18 to 20,
**characterised in that** the measurement source (3) comprises an adjustable current source, the output of which are provided with an adjustable voltage limitation circuit and a polarity inverter where appropriate.

22. An apparatus according to one of Claims 18 to 21,
**characterised in that** the measurement module (4) contains a comparator which is set up to receive the spark gap signal (F) and an adjustable limit value (G),
and **in that** the apparatus is set up so that the output of the comparator is supplied via a switching device to a lowpass filter to form an average during a measurement period (M), during the measurement period (M) the switching device being in the conductive state, and between the measuring periods (M) the switching device being in the insulated state.

23. An apparatus according to one of Claims 18 to 22,
**characterised in that** the generator (2) comprises a Class C amplifier, a modulation input being provided for receiving a machining period signal (T),
and **in that** the modulation depth during this is 100%.

24. An apparatus according to one of Claim 18 to 23,
**characterised in that** the generator (2) consists of at least two switching elements (10, 11) in half-bridge circuit and anti-parallel diodes (12, 13), the switching elements (10, 11) being moved into the non-conductive state via an inhibiting input by means of a machining period signal (T).

25. An apparatus according to one of Claims 18 to 24,
**characterised in that** the generator (2) contains a serial output configuration (R, C, L), which comprises one or more of the following elements:
- an adjustable load resistance (R)
- an adjustable inductance (L)
- an adjustable capacitance (C).

26. An apparatus according to Claim 25,
**characterised in that** the elements are set so that the resonance frequency formed by the inductance (L) and the capacitance (C) lies in the vicinity of the operating frequency of the generator (2).

27. An apparatus according to Claim 25,
**characterised in that** the elements are set so that the resonance frequency formed by the inductivity (L) and the capacitance (C) is a multiple of the operating frequency of the generator (2), and the load resistance (R) is set so that the resonance vibration substantially fades out during a single pulse of the generator (2).

28. An apparatus according to Claim 25,
**characterised in that** the inductance (L) is set to the value zero, and the values for the capacitance (C) and the load resistance (R) are set so that their time constant is greater than the duration of a single pulse of the generator (2).

## Revendications

1. Procédé pour l'usinage de finition par électro-érosion d'une pièce à usiner (6) au moyen d'une électrode (5), avec lequel l'électrode (5) et la pièce à usiner (6) se font face à une distance d'usinage de finition, et la pièce à usiner (6) est alimentée dans un processus régulé avec des impulsions de finition, avec lequel l'usinage s'effectue de façon intermittente, les impulsions de finition étant placées sur le gap pendant les temps d'usinage (T), et une source de mesure (3) étant placée sur le gap au moins pendant les temps d'interruption (P),
**caractérisé en ce que**
- on détermine pendant les temps d'interruption (P) par mesure électrique si l'électrode (5) est en contact avec la pièce à usiner (6),
- et à partir de cette mesure on obtient un rapport de palpation par contact qui détermine la fréquence du contact, et **en ce que**
- on en déduit un signal de réglage pour le réglage dû processus.

2. Procédé selon la revendication 1, **caractérisé en ce que** l'enregistrement de vibrations de l'électrode de travail (5) s'effectue en déterminant à chaque fois pendant des temps de mesure (M) à partir de la forme du signal de l'éclateur à étincelle (F) le rapport de palpation par contact des vibrations de l'électrode.

3. Procédé selon la revendication 2, **caractérisé en ce que** le rapport de palpation par contact est défini comme la part du temps de mesure (M) pendant laquelle l'électrode de travail (5) est en contact avec la pièce à usiner (6).

4. Procédé selon la revendication 2 ou 3,
**caractérisé en ce que** le temps de mesure (M) est synchronisé avec le temps d'interruption (P), mais **en ce que** son démarrage est retardé d'un temps de temporisation (D).

5. Procédé selon l'une quelconque, des revendications 2 à 4, **caractérisé en ce que**
une première grandeur de guidage (SC) générée dans un module de mesure (4) à partir du rapport de palpation par contact déterminé et d'une première valeur de consigne est amenée à un servorégulateur (8) afin de commander un système d'avance (X,Y).

6. Procédé selon la revendication 5, **caractérisé en ce que**,
si le rapport de palpation par contact déterminé dépasse la première valeur de consigne, la vitesse d'avance est réduite et si le rapport de palpation par contact est inférieur à la première valeur de consigne, la vitesse d'avance est augmentée.

7. Procédé selon l'une quelconque des revendications de 2 à 6, **caractérisé en ce qu'**une seconde grandeur de guidage (GC) générée à partir du rapport de palpation par contact calculé et d'une seconde valeur de consigne contrôle la durée du temps d'usinage (T).

8. Procédé selon la revendication 7, **caractérisé en ce que**,
si le rapport de palpation par contact déterminé est inférieur à la seconde valeur de consigne, la durée du temps d'usinage (T) est réduite, et/ou si le rapport de palpation par contact est supérieur à la seconde valeur de consigne, la durée du temps d'usinage (T) est augmentée.

9. Procédé selon l'une quelconque des revendications 1 à 8, **caractérisé en ce qu'**une source de mesure (3)- présente une caractéristique de source de courant avec limitation de tension.

10. Procédé selon la revendication 9, **caractérisé en ce que**
la caractéristique de source de courant de la source de mesure (3) peut être réglée entre 10 mA et 600 mA, et la limitation de tension de la source de mesure (3) peut être réglée entre 1 V et 100 V.

11. Procédé selon la revendication 9 ou 10,
**caractérisé en ce que**
le signal de l'éclateur à étincelle (F) est comparé avec une valeur limite (G) réglable dans le module de mesure (4) , la valeur limite (G) étant inférieure à la limitation de tension réglée de la source de mesure (3), et **en ce que** le résultat de la comparaison est amené pendant le temps de mesure (M) à un filtre, le rapport de palpation par contact déterminé étant maintenu sans changement entre les temps de mesure (M) dans le filtre.

12. Procédé selon l'une quelconque des revendications 1 à 11, **caractérisé en ce que**
la polarité du signal de sortie de la source de mesure (3) est réglée positive ou négative ou en alternance positive ou négative de temps d'interruption (M) en temps d'interruption (M).

13. Procédé selon l'une quelconque des revendications 1 à 12, **caractérisé en ce que**
le temps d'usinage (T) caractéristique est de 30 ms sans intervention de réglage et est réduit de façon linéaire avec la diminution du rapport de palpation par contact au moyen de la grandeur de guidage (GC) jusque vers 0 avec 0 % de rapport de palpation par contact.

14. Procédé selon la revendication 13, **caractérisé en ce que**
le temps d'interruption (P) caractéristique est de 1 ms et le temps de temporisation (D) caractéristique de 200 µs.

15. Procédé selon l'une quelconque des revendications 1 à 13, **caractérisé en ce que**
le temps d'interruption (P) caractéristique est de 200 µs eL le Lemps de temporisation (D) caractéristique 0, et le temps de mesure (M) caractéristique est égal au temps d'interruption (P).

16. Procédé selon l'une quelconque des revendications 1 à 15, **caractérisé en ce que**
un générateur (2) génère des impulsions bipolaires ou monopolaires, dont la durée se situe entre 10 µs et 20 ns, et dont l'amplitude de courant se situe entre 10 A et 500 mA, et dont la fréquence d'impulsion se situe entre 100 KHz et 25 MHz, et
le générateur (2) présente une entrée d'activation pour réceptionner le signal du temps d'usinage (T) et pour générer les impulsions seulement pendant ce temps (T).

17. Dispositif pour l'usinage de finition par électro-érosion d'une pièce à usiner (6) au moyen d'une électrode (5), avec lequel l'électrode (5) et la pièce à usiner (6) se font face à une distance d'usinage de finition, et la pièce à usiner (6) est alimentée avec des impulsions de finition dans un processus régulé, le dispositif étant aménagé de telle sorte que l'usinage s'effectue de façon intermittente, les impulsions de finition étant placées sur le gap à pendant des temps d'usinage (T), et une source de mesure (3) étant placée sur le gap au moins pendant des temps d'interruption (P).
**caractérisé en ce** le que dispositif est aménagé de telle sorte que
- on détermine pendant les temps d'interruption (P) par mesure électrique si l'électrode (5) est en contact avec la pièce à usiner (6),
- et à partir de cette mesure on obtient un rapport de palpation par contact qui détermine la fréquence du contact, et en ce que
- on en déduit un signal de réglage pour le réglage du processus.

18. Dispositif selon la revendication 17,
**caractérisé en ce que**
- un générateur (2) est prévu qui génère de façon cyclique les impulsions de finition seulement pendant un temps d'usinage (T),
- la source de mesure (3) est aménagée de telle sorte qu'elle génère les impulsions de mesure en fonction d'un signal de temps d'interruption (P) pendant le temps d'interruption,
- un module de mesure (4) est prévu qui est aménagé de telle sorte qu'il détermine pendant un temps de mesure (M) à partir du signal de l'éclateur à étincelle (F) un rapport de palpation par contact des vibrations de l'électrode, et
- le module de mesure (4) présente une première (SC) et/ou une seconde (GC) sorties de grandeur de guidage afin de commander un système d'avance (X, Y) en fonction du rapport de palpation par contact et/ou de contrôler la durée du temps d'usinage (T).

19. Dispositif selon la revendication 18,
**caractérisé en ce qu'**il est aménagé de telle sorte que le rapport de palpation par contact est défini comme la part du temps de mesure (M) pendant laquelle l'électrode de travail (5) est en contact avec la pièce à usiner (6).

20. Dispositif selon la revendication 18 ou 19,
**caractérisé en ce que** le générateur (2), la source de mesure (3) et/ou le module de mesure (4) présentent une entrée d'activation avec laquelle son activation peut être contrôlée.

21. Dispositif selon l'une quelconque des revendications 18 à 20, **caractérisé en ce que**
la source de mesure (3) présente une source de courant réglable dont la sortie est pourvue d'un circuit réglable de limitation de courant et d'un circuit d'interruption d'impulsion et éventuellement d'un inverseur de polarité.

22. Dispositif selon l'une quelconque des revendications 18 à 21, **caractérisé en ce que**
le module de mesure (4) contient un comparateur qui est aménagé pour la réception du signal de l'éclateur à étincelle (F) et d'une valeur limite (G) réglable, et **en ce que** le dispositif est aménagé de telle sorte que la sortie du comparateur est amenée au moyen d'un dispositif de commutation à un filtre passe-bas pour la formation d'une valeur moyenne pendant un temps de mesure (M), le dispositif de commutation étant dans l'état conducteur pendant le temps de mesure (M), et le dispositif de commutation étant dans l'état isolé entre les temps de mesure (M).

23. Dispositif selon l'une quelconque des revendications 18 à 22, **caractérisé en ce que**
le générateur (2) présente un amplificateur de classe C, une entrée de modulation étant prévue pour la réception d'un signal du temps d'usinage (T), et **en ce que** la profondeur de modulation est alors de 100 %.

24. Dispositif selon l'une quelconque des revendications 18 à 23, **caractérisé en ce que** le générateur (2) comprend au moins deux éléments de commutation (10 11) dans un circuit en demi-pont et diodes (12, 13) antiparallèles, les éléments de commutation (10, 11) étant mis dans l'état non conducteur au moyen d'une entrée de blocage à l'aide d'un signal de temps d'usinage (T).

25. Dispositif selon l'une quelconque des revendications 18 à 24, **caractérisé en ce que**
le générateur (2) contient un câblage de sortie (R, C, L) série, qui présente un ou plusieurs des éléments suivants:
- une résistance de charge (R) réglable
- une inductance (L) réglable
- une capacité (C) réglable.

26. Dispositif selon la revendication 25,
**caractérisé en ce que** les éléments sont réglés de telle sorte que la fréquence de résonance formée par l'inductance (L) et la capacité (C) se situent à proximité de la fréquence de service du générateur (2).

27. Dispositif selon la revendication 25,
**caractérisé en ce que**
les éléments sont réglés de telle sorte que la fréquence de résonance formée par l'inductance (L) et la capacité (C) est plusieurs fois égale à la fréquence de service générateur (C), et la résistance de charge (R) est réglée de telle sorte que la vibration de résonance diminue sensiblement pendant une impulsion individuelle du générateur (2).

28. Dispositif selon la revendication 25,
**caractérisé en ce que**
l'inductance (L) est réglée sur la valeur zéro et les valeurs pour la capacité (C) et la résistance de charge (R) sont réglées de telle sorte que leur constante dans le temps est supérieure à la durée d'une impulsion individuellc du générateur (2).
